# FASCICULE DE BREVET EUROPEEN

(11) **EP 1 860 672 B1**
(45) Date de publication et mention de la délivrance du brevet: **13.07.2016**
(21) Numéro de dépôt: 07290596.1
(22) Date de dépôt: 10.05.2007
(51) Int. Cl.: H01F 27/04, H01R 4/70, H02G 15/04

(54) **Ensemble passe-tige destiné à être monté à travers un orifice d'une paroi d'un transformateur électrique**
Stangenbuchsenanordnung, die durch eine Öffnung einer Wand eines Stromwandlers eingebaut werden soll
Bushing assembly designed to be mounted through an orifice in the wall of an electricity transformer

(30) Priorité: 23.05.2006 FR 0604640
(43) Date de publication de la demande: 28.11.2007
(73) Titulaire: Pioch, 06510 Carros (FR)
(72) Inventeur: Pioch, Olivier, 06200 Nice (FR)
(74) Mandataire: Blot, Philippe Robert Emile

(56) Documents cités:
- EP-A- 1 638 180
- EP-A1- 0 944 101
- DE-B- 1 026 818
- FR-A- 2 767 959
- GB-A- 2 265 501
- US-A- 2 065 315
- US-A- 2 228 089
- US-B1- 6 683 249

## Description

L'invention concerne en général un ensemble passe-tige destiné à être monté à travers un orifice d'une paroi d'un transformateur électrique.

Plus précisément, l'invention concerne un ensemble passe-tige du type comprenant une tige longitudinale conductrice susceptible d'être engagée à travers l'orifice, et un dispositif électriquement isolant susceptible d'être interposé dans l'orifice entre la tige et la paroi, la tige étant susceptible d'être électriquement connectée à une sortie basse tension du transformateur par une extrémité inférieure disposée d'un côté intérieur de la paroi et étant susceptible d'être électriquement connectée à un ou plusieurs conducteurs électriques par une extrémité extérieure disposée d'un côté extérieur de la paroi.

On connaît des ensembles passe-tige de ce type par exemple par les documents FR-98 03319 et FR-97 10968. De tels ensembles peuvent être réalisés de multiples façons. Ils peuvent comporter différents types de tiges, par exemple de section ronde ou rectangulaire. Les dispositifs isolants peuvent être réalisés dans différents types de matériau, et les conducteurs électriques peuvent partir de la tige suivant différentes orientations.

Le document US-A-2 065 315 divulgue un ensemble passe-tige selon le préambule de la revendication 1.

De nouvelles normes imposent que les extrémités extérieures des tiges des ensembles passe-tige basse tension soient enveloppées d'une protection. Par ailleurs, de manière à réduire la gamme de protection à produire, il est souhaitable que ces protections s'adaptent à plusieurs types de passe-tige.

L'invention vise donc à proposer un ensemble passe-tige pourvu d'une protection de l'extrémité extérieure de la tige, cette protection étant aussi souple d'utilisation que possible.

A cette fin, l'invention propose un ensemble passe-tige selon la revendication 1 du type décrit ci-dessus, qui comprend une gaine de protection disposée autour de l'extrémité extérieure de la tige et pourvue d'au moins un trou de passage du ou des conducteurs électriques, la gaine étant susceptible d'adopter au moins une première configuration dans laquelle le ou chaque trou de passage est apte à laisser passer des conducteurs s'étendant à partir de la tige suivant une première direction, et une seconde configuration dans laquelle le ou chaque trou de passage est apte à laisser passer des conducteurs s'étendant à partir de la tige suivant une seconde direction différente de la première.

L'ensemble passe-tige peut également présenter une ou plusieurs des caractéristiques ci-dessous, considérées individuellement ou selon toutes les combinaisons techniquement possibles :
- la première direction est longitudinale, la seconde direction formant un angle compris entre 0° et 90° par rapport à la première ;
- la gaine comprend une partie de fixation sur le dispositif isolant, un fond portant le ou les trous de passage, et un soufflet annulaire s'étendant entre la partie de fixation et le fond autour de l'extrémité extérieure de la tige ;
- le soufflet est en caoutchouc naturel ou synthétique ;
- la gaine comprend un boîtier disposé autour de l'extrémité extérieure de la tige et percé au moins de première et seconde lumières disposées suivant les première et seconde directions à partir de l'extrémité extérieure de la tige, une couvercle plein apte à fermer l'un de la première ou de la seconde lumière, et un couvercle ajouré portant le ou les trous de passage apte à fermer l'autre de la première ou de la seconde lumière ;
- le boîtier comprend deux demi coquilles assemblées l'une à l'autre ;
- l'ensemble comprend une plaque de fixation vissée sur le dispositif isolant, et une bride de fixation de la gaine sur la plaque ;
- la tige présente une extrémité extérieure filetée de section ronde et l'ensemble comprend une bague de fixation enfilée sur l'extrémité extérieure filetée, un écrou de blocage de la bague contre le dispositif isolant vissé sur l'extrémité extérieure, et un collier de fixation de la gaine sur la bague ;
- le dispositif isolant comprend
   . un corps destiné à être disposé du côté intérieur de la paroi,
   . un couvercle destiné à être disposés du côté extérieur de la paroi et sur lequel la gaine est fixée,
   . des moyens de liaison du corps et du couvercle pour enserrer ladite paroi entre eux ; et
- le dispositif isolant comprend
   . un corps destiné à être disposé dans l'orifice et comprenant une collerette s'étendant autour de l'orifice du côté extérieur de la paroi,
   . un couvercle sur lequel la gaine est fixée, destiné à être rigidement fixé du côté extérieur de la paroi en pinçant la collerette du corps contre la paroi.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue éclatée en perspective d'un ensemble passe-tige conforme à un premier mode de réalisation de l'invention, dans lequel la tige présente une section rectangulaire ;
- la figure 2 est une vue en perspective et en coupe partielle de l'ensemble passe-tige de la figure 1 à l'état assemblé, monté sur la paroi d'un transformateur, la gaine de protection n'étant pas représentée ;
- la figure 3 est une vue en perspective de l'ensemble passe-tige de la figure 1, une moitié du soufflet de protection étant arrachée ;
- la figure 4 est une vue éclatée en perspective d'une variante du premier mode de réalisation de l'invention, dans laquelle la tige présente une section ronde ;
- la figure 5 est une vue en coupe de l'ensemble passe-tige de la figure 4, à l'état assemblé ;
- la figure 6 est une vue en perspective de l'ensemble passe-tige de la figure 4, à l'état assemblé ;
- la figure 7 est une vue en perspective d'un ensemble passe-tige conforme à un second mode de réalisation de l'invention, pour une tige de section ronde, la gaine de protection étant éclatée ; et
- la figure 8 est une vue en perspective d'une variante de l'ensemble passe-tige de la figure 7, la gaine de protection étant à l'état assemblé.

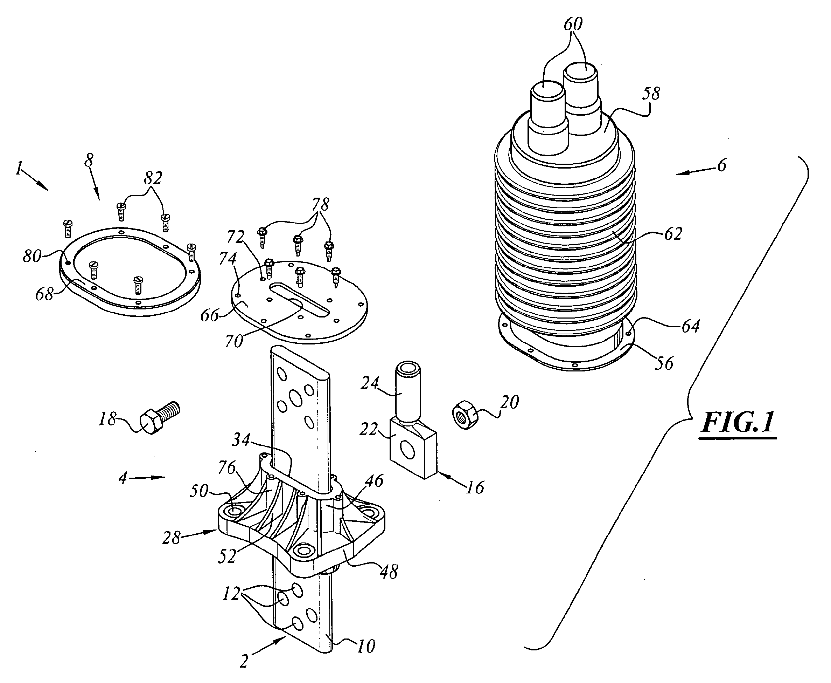

L'ensemble 1 représenté sur la figure 1 est une traversée destinée à permettre le passage d'une ligne électrique, notamment de forte intensité, au travers de la paroi du boîtier d'un transformateur électrique.

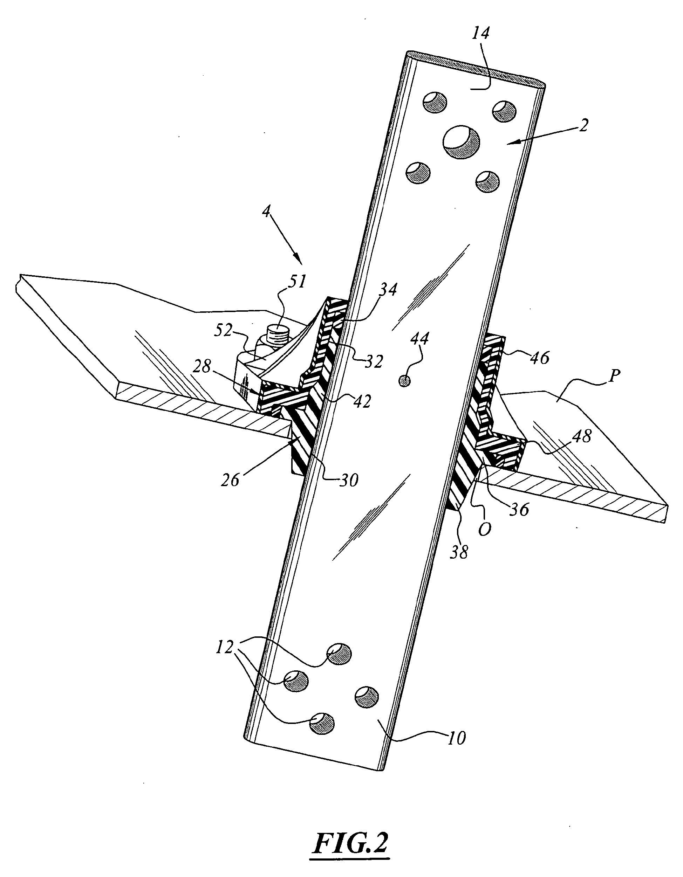

L'ensemble comporte une tige longitudinale conductrice 2 susceptible d'être engagée à travers un orifice O de la paroi P (voir figure 2), un dispositif passe-tige 4 électriquement isolant susceptible d'être interposé dans l'orifice O entre la tige 2 et la paroi P, une gaine 6 de protection de la tige, et des moyens 8 de fixation de la gaine 6 sur le dispositif isolant 4.

La tige conductrice 2 est rectiligne et présente une section oblongue, par exemple rectangulaire avec des petits côtés arrondis. Elle est réalisée en matériau non ferreux, typiquement en cuivre. La tige 2 est susceptible d'être électriquement connectée à une sortie basse tension du transformateur par une extrémité inférieure 10 disposée d'un côté intérieur de la paroi P. Elle présente, dans ce but, des perçages 12 pour la connexion de câbles électriques.

La tige 2 est également susceptible d'être électriquement connectée à un ou plusieurs conducteurs électriques (non représentés) par une extrémité extérieure 14 s'étendant en saillie longitudinalement par rapport au dispositif électriquement isolant 4, d'un côté extérieur de la paroi P.

A cette fin, l'ensemble 1 comporte un connecteur 16 vissé sur l'extrémité 14 à l'aide de la vis 18 et de l'écrou 20. Le connecteur 16 est réalisé en un matériau électriquement conducteur et comprend une plaquette 22 de fixation sur la tige 2 et une cosse 24 de réception d'une extrémité conductrice du conducteur électrique. Deux conducteurs électriques sont électriquement connectés à la tige 2 par l'intermédiaire de la cosse 24 et de la plaquette 22. En variante, le connecteur 16 peut comporter plusieurs cosses 16, recevant chacune l'extrémité d'un conducteur électrique

Comme le montre la figure 2, le dispositif passe-tige 4 comporte un corps 26 et un couvercle 28 coiffant le corps 26. Le corps 26 et le couvercle 28 sont réalisés essentiellement en matière thermoplastique, par exemple du polyamide ou du polybutidène téréphtalate.

Le corps 26 est traversé longitudinalement de part en part par un conduit 30 de réception de la tige conductrice 2.

Le couvercle 28 présente une forme de cloche et délimite intérieurement un logement 32 de réception de l'essentiel du corps 26. Le logement 32 se prolonge à l'extrémité supérieure du couvercle 28 par une lumière 34 de passage de la tige conductrice 2. Cette lumière a une section sensiblement égale à celle de la tige 2.

Le corps 26 et le couvercle 28 sont adaptés pour être disposés, comme représenté sur la figure 2, d'un même côté de la paroi P.

A cet effet, le corps 26 présente essentiellement la forme d'un manchon de section interne très légèrement supérieur à la section de la tige conductrice 2.

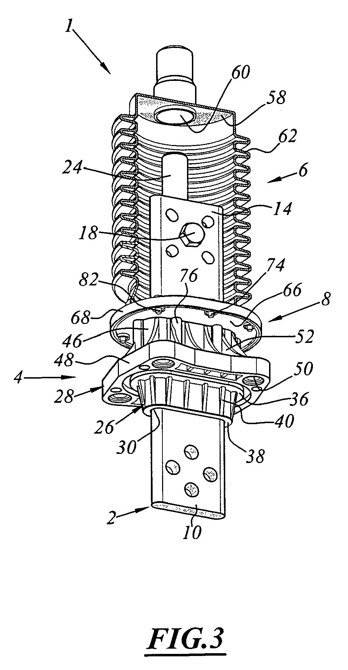

Le corps 26 comporte extérieurement, dans sa partie médiane, une collerette 36 d'appui sur la surface externe de la paroi P. Cette collerette 36 sépare longitudinalement le corps en une partie destinée à être engagée dans l'orifice O et une partie destinée à être reçue dans le couvercle 28. La partie du corps 26 engagée dans l'orifice O présente la forme d'un collet 38 présentant extérieurement des nervures longitudinales 40 de rigidification (visibles sur la figure 3). Ces nervures 40 sont de hauteur progressivement décroissante depuis la collerette 36 jusqu'à l'extrémité libre du collet 38.

De l'autre côté de la collerette 36, le corps 26 est défini par un prolongement tubulaire 42 de section oblongue délimitant le conduit 30. Un perçage non représenté est ménagé dans le prolongement tubulaire 42. Ce perçage débouche à l'intérieur du conduit 30. Il est adapté pour recevoir l'extrémité d'une goupille, non représentée, destinée à la retenue axiale de la tige 2. L'autre extrémité de la goupille est reçue dans un perçage 44 de la tige 2, aligné avec le perçage du prolongement 42.

Le couvercle 28 comporte une paroi tubulaire 46 entourant le prolongement tubulaire 42 du corps. Cette paroi tubulaire 46 comporte, à son extrémité inférieure en contact avec la surface externe de la paroi P, une base de fixation 48. La base 48 est de forme sensiblement rectangulaire avec des coins arrondis. Dans les coins sont ménagés des perçages 50 (visibles sur la figure 1) pour la réception de boulons 51 de fixation du dispositif 4 sur la plaque P. Des nervures de renfort 52, de forme triangulaire, relient la surface exposée de la base 48 à la paroi tubulaire 46.

La gaine 6 est disposée autour de l'extrémité extérieure 14 de la tige. Elle comprend une partie sensiblement annulaire 56 de fixation sur le dispositif isolant 4, un fond 58 portant par exemple deux trous 60 de passage des conducteurs électriques connectés à la tige 2, et un soufflet 62 reliant de manière étanche la partie de fixation 56 et le fond 58.

Le soufflet 62 est réalisé en caoutchouc naturel ou synthétique, et présente la forme d'une manche souple de section ronde. De préférence, le soufflet 62 est réalisé en un matériau particulièrement souple, par exemple un élastomère silicone ou un caoutchouc hydrogéné du type HNBR (Hydrogenatide Nitrile Butadien Rubber). Il forme une pluralité de plis circulaires se succédant depuis la partie 66 jusqu'au fond 58.

La partie de fixation 56 présente la forme d'une collerette venue de matière avec une première extrémité ouverte du soufflet 62, en saillie vers l'extérieur de celui-ci. La collerette 56 est percée de trous de fixation 64.

Le fond 58 ferme l'extrémité du soufflet 62 opposée à la collerette 56. Il est lui aussi venu de matière avec le soufflet. Les trous de passage 60 sont délimités par un fût cylindrique en saillie sur le fond 58 vers l'extérieur du soufflet 62.

Les moyens 8 de fixation de la gaine 6 sur le dispositif isolant 4 comprennent une plaque 66 enfilée sur l'extrémité extérieure 14 de la tige et une bride 68 de fixation de la gaine 6 sur la plaque 66, apte à pincer la gaine 6 entre la plaque de fixation 66 et la bride 68.

La plaque 66 présente, en son centre, une fente oblongue 70 traversée par la tige 2. La fente 70 présente une forme correspondant sensiblement à la section de la tige 2. La plaque 66 est percée de deux séries de trous, une première série de trous 72 disposés autour de la fente 70, et une seconde série de trous 74 le long du bord extérieur de la plaque.

En vue de la fixation de la plaque 66, le couvercle 28 comprend une pluralité de fûts 76 longitudinaux autour de la paroi tubulaire 46, entre les nervures 52. Des vis 78 sont engagées dans les trous 72 et sont vissées dans des orifices longitudinaux ménagés au centre des fûts 76.

La plaque 66 est disposée longitudinalement le long de la tige 2 au-delà du dispositif isolant 4, vers l'extérieur de la paroi P, de manière à ne pas réduire la longueur longitudinale efficace d'isolation procurée par le dispositif isolant. De préférence, la plaque 66 est disposée contre l'extrémité longitudinale du couvercle 28, et est plaquée contre ce couvercle.

La collerette 56 de la gaine est prise entre la bride 68 et la face de la plaque 66 opposée au dispositif isolant 4. Les trous 74 de la plaque, les trous 64 de la collerette et des trous 80 ménagés dans la bride sont disposés en coïncidence. Des vis 82 traversent les trous disposés en coïncidence solidarisant ainsi la gaine 6 à la plaque 66.

La plaque 66 et la bride 68 sont réalisées dans des matériaux électriquement isolants, par exemple dans une matière plastique rigide.

La gaine 6 est susceptible d'être disposée comme représenté sur la figure 3, c'est-à-dire dans une configuration dans laquelle chaque trou de passage 60 est orienté longitudinalement. Chaque trou est ainsi susceptible de laisser passer un conducteur s'étendant suivant la direction longitudinale à partir de la tige 2.

Du fait de la flexibilité du soufflet 62, la gaine 6 est également susceptible d'adopter une configuration coudée, dans laquelle chaque trou de passage 60 est disposé suivant une direction inclinée par rapport à la direction longitudinale. L'angle d'inclinaison est typiquement compris entre 0° et 90°. Chaque trou de passage est ainsi susceptible de laisser passer un conducteur s'étendant à partir de la tige suivant ladite direction inclinée. Dans ce cas, la cosse 24 du connecteur sera généralement elle aussi inclinée par rapport à la direction longitudinale.

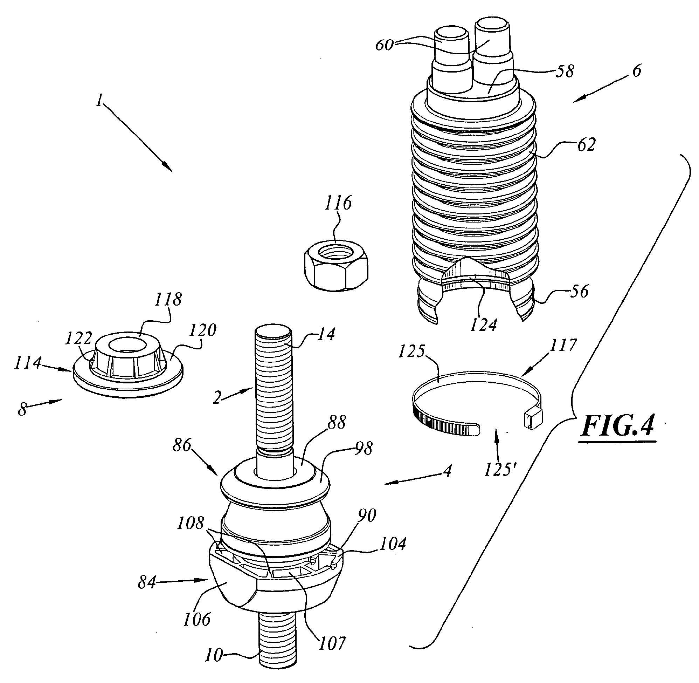

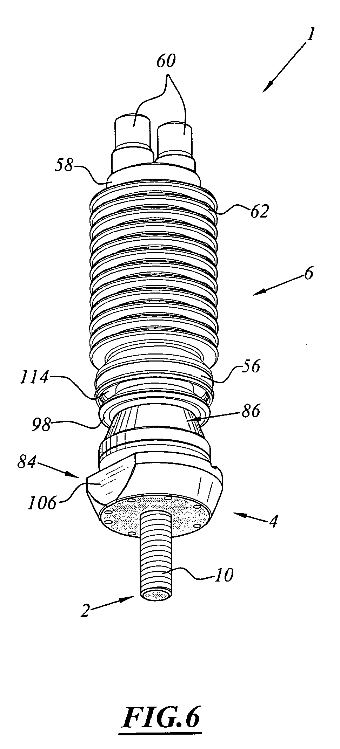

Les figures 4 à 6 représentent une variante du premier mode de réalisation de l'invention.

Seules les différences avec l'ensemble passe-tige décrit en référence aux figures 1 à 3 seront mentionnées ici. Les éléments identiques ou correspondant à ceux de l'ensemble des figures 1 à 3 seront désignés par les mêmes références.

La tige conductrice 2 présente une section ronde, et porte un filetage au moins à ses extrémités intérieure 10 et extérieure 14.

Le dispositif passe-tige isolant 4 comporte, comme précédemment, un corps désigné par la référence 84 et un couvercle désigné par la référence 86. Le corps 84 et le couvercle 86 sont destinés à être disposés respectivement d'un côté intérieur de la paroi P et d'un côté extérieur de la paroi P, la tige 2 formant des moyens de liaison du corps et du couvercle pour enserrer la paroi entre eux.

Le corps 84 et le couvercle 86 sont généralement réalisés en porcelaine. Ils peuvent également être réalisés totalement ou partiellement en une matière plastique, notamment du PBT (PolyButylène Téréphtalate) ou du polyamide.

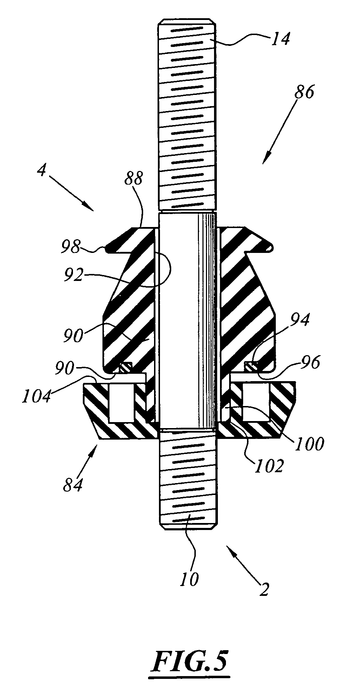

Le couvercle 86 présente une forme générale sensiblement cylindrique, avec une face supérieure 88 et une face inférieure 90, cette dernière étant adaptée pour venir en contact avec la face extérieure de la paroi P sur laquelle est installé l'ensemble passe-tige. Il comporte un passage central longitudinal 92 pour la réception de la tige 2 (figure 5). Une gorge 94 centrée sur l'axe de la tige 2 est ménagée dans la face 90. Un joint torique 96 est placé dans la gorge 94, et assure l'étanchéité entre le couvercle 86 et la paroi P. Une collerette périphérique 98 est formée autour de la face supérieure 88 du couvercle. Comme le montre la figure 5, le couvercle 86 comporte un tronçon cylindrique 100 longitudinal en saillie au centre de la face inférieure 90" adapté pour traverser l'orifice O de la paroi P sur laquelle est installé le dispositif passe-tige, et pour pénétrer à l'intérieur d'un logement 102 traversant centralement le corps 84.

Le corps 84 présente la forme d'une bague annulaire sensiblement tronconique, présentant une face 104 formant une surface d'appui 96 sur la face interne de la paroi P. Le corps 84 comporte deux méplats 106 diamétralement opposés destinés au maintien en position du corps 84 à l'aide d'une clé adaptée ou d'une butée ménagée sur la paroi. Le corps 84 est creux et comporte intérieurement une paroi cylindrique 107 délimitant le logement 102, et un ensemble de nervures 108 reliant la paroi cylindrique 107 et la paroi externe du corps 84. Les nervures 108 ont une répartition régulière autour de la paroi 107.

Comme le montre la figure 4, les moyens 8 de fixation de la gaine 6 sur le dispositif isolant 4 comprennent une bague de fixation 114 enfilée sur l'extrémité extérieure 14 de la tige 2, un écrou 116 de blocage de la bague 114 contre le dispositif isolant 4 vissé sur l'extrémité supérieure filetée 14 de la tige, et un collier 117 de fixation de la gaine 6 sur la bague 114.

La bague 114 comprend une partie cylindrique 118, et une collerette 120 venue de matière avec la partie cylindrique 118 et s'étendant autour d'une extrémité axiale de la partie cylindrique. Des nervures de renforcement triangulaires 122 relient la partie cylindrique 118 à la collerette 120, et sont régulièrement réparties autour de la bague 114. La bague 114 est réalisée en un matériau électriquement isolant, par exemple en matière plastique.

La bague 114 est enfilée sur la tige 2, de telle sorte que la collerette 120 soit plaquée contre la face supérieure 88 du couvercle du dispositif isolant. Elle est disposée longitudinalement vers l'extérieur de la paroi P au-delà du dispositif isolant 4.

La partie de fixation 56 de la gaine présente une forme annulaire. Elle comporte une gorge interne 124, de diamètre interne correspondant sensiblement au diamètre externe de la collerette 120.

Comme précédemment, la partie de fixation 56 de la gaine est venue de matière avec le soufflet 62.

La collerette 20 est engagée dans la gorge 124. Le collier de fixation 117 est disposé à l'extérieur de la gaine 6, autour de la gorge 124 et de la collerette 120. Le collier 117 comprend typiquement une bande 125 disposée autour de la gaine 6 et des moyens 125' de mise en tension de la bande. Ce collier est typiquement un collier en matière plastique de marque Nicholson, couramment utilisé pour fixer des câbles ou des gaines électriques. Il assure le cerclage de la partie de fixation 56 de la gaine sur la tranche de la collerette 120, et pince donc la gaine 6 entre la bague 114 et le collier 117.

En variante, la gaine 6 peut être fixée au dispositif passe tige 4 par une plaque et une bride du type décrit relativement à la figure 1. La plaque remplace la bague 114. Inversement, dans la variante de réalisation des figures 1 à 3, la gaine 6 peut être fixée au dispositif isolant 4 à l'aide d'un collier venant enserrer l'extrémité de la gaine 6 contre la tranche de la plaque 66.

L'ensemble 1 comprend en outre un connecteur 16 (non représenté) du même type que celui de la figure 1. La plaquette 22 est enfilée sur la tige filetée 2, par exemple entre l'écrou 116 et la bague 114.

Comme précédemment, la gaine 6 peut s'étendre longitudinalement, ou présenter une configuration coudée. Ainsi, les trous de passage 60 peuvent être orientés longitudinalement, ou suivant une direction inclinée par rapport à la direction longitudinale. Ces trous sont ainsi aptes à laisser passer des conducteurs électriques s'étendant longitudinalement à partir de la tige 2, ou suivant une direction inclinée par rapport à la direction longitudinale à partir de la tige 2.

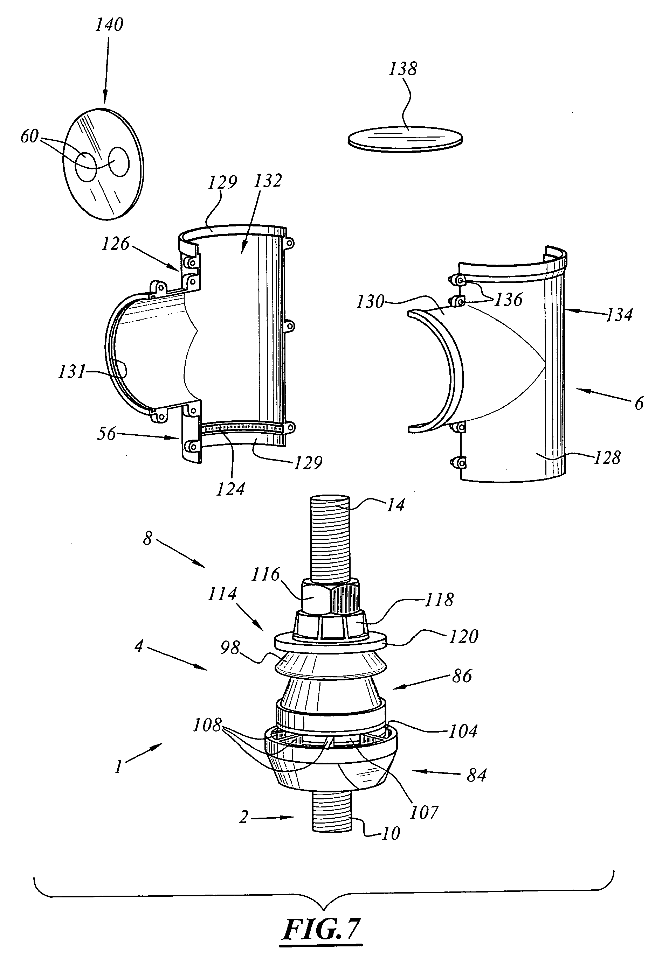

Un second mode de réalisation de l'invention est représenté sur la figure 7. La tige 2, le dispositif isolant 4 et les moyens de fixation 8 de la gaine 6 sur le dispositif isolant 4 sont identiques à ceux décrits en référence aux figures 4 à 6.

La gaine 6 comprend un boîtier 126 en T disposé autour de l'extrémité extérieure 14 de la tige 2. Le boîtier 126 est creux et présente un tronçon cylindrique 128 longitudinal ouvert par des lumières 129 à ses deux extrémités, et un tronçon cylindrique 130 s'étendant perpendiculairement au tronçon longitudinal 128 et se raccordant à celui-ci. Le tronçon 130 est ouvert par une lumière 131 à son extrémité libre opposée au tronçon 128. Le boîtier est formé de deux demi-coquilles 132 et 134 assemblées l'une à l'autre et fixées l'une à l'autre par des vis 136. Une extrémité inférieure du tronçon longitudinal 128 porte une gorge interne identique à la gorge 124 de la gaine de la figure 4. Comme précédemment, la collerette 120 est engagée dans la gorge 124 et un collier (non représenté) assure le serrage de la gaine 6 sur la tranche de la collerette 120.

La gaine 6 comprend encore un couvercle plein 138, et un couvercle ajouré 140 dans lequel sont formés les trous de passage 60.

La gaine 6 est susceptible d'adopter deux configurations.

Dans la première configuration, le couvercle plein 138 ferme l'extrémité du tronçon 128 opposée au dispositif isolant 4. Le couvercle ajouré 140 est alors disposé sur la lumière 131 à l'extrémité libre du tronçon 130. Dans ce cas, les trous de passage 60 sont orientés de telle sorte qu'ils sont aptes à laisser passer des conducteurs s'étendant à partir de la tige 2 suivant une direction perpendiculaire à la direction longitudinale.

Dans la seconde configuration, le couvercle plein 138 ferme la lumière 131. Le couvercle ajouré 140 est disposé sur la lumière 129 à l'extrémité du tronçon 128 opposée au dispositif isolant 4. Dans cette seconde configuration de la gaine 6, les trous de passage 60 sont orientés longitudinalement et sont donc aptes à laisser passer des conducteurs s'étendant à partir de la tige 2 suivant la direction longitudinale.

En variante, le tronçon 130 de la gaine 6 peut ne pas s'étendre suivant une direction perpendiculaire à la direction longitudinale, mais selon une direction inclinée, formant un angle compris entre 0° et 90° par rapport à la direction longitudinale.

La gaine est réalisée en un caoutchouc naturel ou synthétique. Elle peut par exemple être réalisée en un matériau élastomère siliconé, ou dans un caoutchouc hydrogéné de type HNBR.

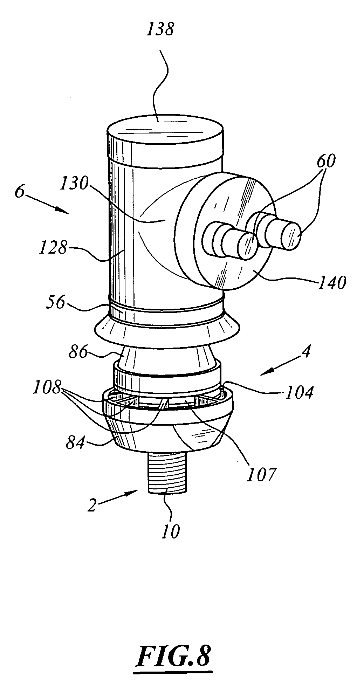

Dans une variante de réalisation représentée sur la figure 8, la gaine 6 n'est pas réalisée en deux demi-coquilles 132 et 134, mais est d'une pièce. Dans ce cas, l'extrémité inférieure du tronçon 128 présente une forme évasée vers le dispositif isolant 4.

La gaine 6 de la figure 7 est montée sur le dispositif isolant 4 en plaçant, dans un premier temps, les deux demi-coquilles de part et d'autre de ce dispositif isolant 4, de manière que la collerette 120 soit placée dans la gorge 124, puis en fixant rigidement les deux demi-coquilles l'une à l'autre à l'aide des vis 136.

Dans la variante de réalisation de la figure 8, la gaine 6 est montée sur le dispositif isolant 4 suivant un mouvement longitudinal orienté vers le dispositif 4. La partie inférieure évasée du tronçon 128 guide la collerette 120 vers la gorge 124. La sollicitation longitudinale exercée sur la gaine 6 permet d'engager à force la collerette 120 dans la gorge 124. Un collier peut être placé autour de la partie de fixation 56 de la gaine pour pincer la gaine 6 contre la bague 114.

En variante, la gaine 6 peut être fixée sur le dispositif isolant à l'aide de la plaque et de la bride décrites relativement à la figure 1.

Les différentes variantes de réalisation des ensembles passe-tige décrits ci-dessus présentent toutes l'avantage que la gaine est fixée à un organe enfilé sur l'extrémité extérieure de la tige et disposé longitudinalement au-delà du dispositif d'isolation électrique. La gaine n'est pas directement fixée sur le dispositif d'isolation électrique. La longueur longitudinale efficace d'isolation électrique est ainsi préservée.

Par ailleurs, tous les ensembles passe-tiges décrits ci-dessus prévoient des moyens pour pincer la gaine contre l'organe de fixation enfilé sur la tige, de telle sorte que la gaine est fixée de manière très solide sur cet organe.

## Revendications

1. Ensemble passe-tige (1) destiné à être monté au travers d'un orifice (O) d'une paroi (P) d'un transformateur électrique, cet ensemble (1) comprenant une tige (2) longitudinale conductrice susceptible d'être engagée à travers l'orifice (O), et un dispositif (4) électriquement isolant susceptible d'être interposé dans l'orifice (O) entre la tige (2) et la paroi (P), la tige (2) étant susceptible d'être électriquement connectée à une sortie basse tension du transformateur par une extrémité intérieure (10) disposée d'un côté intérieur de la paroi (P) et étant susceptible d'être électriquement connectée à un ou plusieurs conducteurs électriques par une extrémité extérieure (14) s'étendant en saillie longitudinalement par rapport au dispositif électriquement isolant (4) d'un côté extérieur de la paroi (P), une gaine (6) de protection disposée autour de l'extrémité extérieure (14) de la tige (2) et pourvue d'au moins un trou (60) de passage du ou des conducteurs électriques, la gaine (6) étant susceptible d'adopter au moins une première configuration dans laquelle le ou chaque trou de passage (60) est apte à laisser passer des conducteurs s'étendant à partir de la tige (2) suivant une première direction et une seconde configuration dans laquelle le ou chaque trou de passage (60) est apte à laisser passer des conducteurs s'étendant à partir de la tige (2) suivant une seconde direction différente de la première, l'enemble passe-tige (4) comprenant un organe (66, 114) de fixation de la gaine (6) enfilé sur l'extrémité extérieure (14) de la tige (2) et disposé longitudinalement vers l'extérieur de la paroi (P) au-delà du dispositif électriquement isolant (4), **caractérisé en ce que** l'ensemble passe-tige (1) comprend également des moyens (68, 117) pour pincer la gaine (6) entre l'organe de fixation (66, 114) et lesdits moyens de pincement (68, 117).

2. Ensemble selon la revendication 1, **caractérisé en ce que** la première direction est longitudinale, la seconde direction formant un angle compris entre 0° et 90° par rapport à la première.

3. Ensemble selon la revendication 1 ou 2, **caractérisé en ce que** la gaine (6) comprend une partie (56) de fixation sur le dispositif isolant (4), un fond (58) portant le ou les trous de passage (60), et un soufflet annulaire (62) s'étendant entre la partie de fixation (56) et le fond (58) autour de l'extrémité extérieure (14) de la tige (12).

4. Ensemble selon la revendication 3, **caractérisé en ce que** le soufflet (62) est en caoutchouc naturel ou synthétique.

5. Ensemble selon la revendication 1 ou 2, **caractérisé en ce que** la gaine (6) comprend un boîtier (126) disposé autour de l'extrémité extérieure (14) de la tige (2) et percé au moins de première et seconde lumières disposées suivant les première et seconde directions à partir de l'extrémité extérieure (14) de la tige (2), une couvercle plein (138) apte à fermer l'un de la première ou de la seconde lumière, et un couvercle ajouré (140) portant le ou les trous de passage (60) apte à fermer l'autre de la première ou de la seconde lumière.

6. Ensemble selon la revendication 5, **caractérisé en ce que** le boîtier (126) comprend deux demi coquilles (132, 134) assemblées l'une à l'autre.

7. Ensemble selon l'une quelconque des revendications 1 à 6, **caractérisé en ce qu'**il comprend une plaque de fixation (66) vissée sur le dispositif isolant (4), et une bride de fixation (68) de la gaine (6) sur la plaque (66).

8. Ensemble selon l'une quelconque des revendications 1 à 7, **caractérisé en ce que** la tige (2) présente une extrémité extérieure (14) filetée de section ronde et **en ce qu'**il comprend une bague de fixation (114) enfilée sur l'extrémité extérieure filetée (14), un écrou (116) de blocage de la bague (114) contre le dispositif isolant (4) vissé sur l'extrémité extérieure (14), et un collier de fixation de la gaine (6) sur la bague (114).

9. Ensemble selon l'une quelconque des revendications 1 à 8, **caractérisé en ce que** le dispositif isolant (4) comprend
- un corps (84) destiné à être disposé du côté intérieur de la paroi (P),
- un couvercle (86) destiné à être disposés du côté extérieur de la paroi (P) et sur lequel la gaine (6) est fixée,
- des moyens de liaison du corps (84) et du couvercle (86) pour enserrer ladite paroi (P) entre eux.

10. Ensemble selon l'une quelconque des revendications 1 à 8, **caractérisé en ce que** le dispositif isolant (4) comprend
- un corps (26) destiné à être disposé dans l'orifice (O) et comprenant une collerette (36) s'étendant autour de l'orifice (O) du côté extérieur de la paroi (P),
- un couvercle (28) sur lequel la gaine (16) est fixée, destiné à être rigidement fixé du côté extérieur de la paroi (P) en pinçant la collerette (36) du corps (26) contre la paroi (P).

11. Ensemble selon l'une quelconque des revendications 1 à 10, **caractérisé en ce que** les moyens de pincement (68, 117) sont distincts de la gaine (6).

## Patentansprüche

1. Durchtrittsstange-Einrichtung (1), die dazu bestimmt ist, durch eine Öffnung (0) einer Wand (P) eines elektrischen Transformators hindurch montiert zu sein, wobei diese Einrichtung (1) aufweist eine stromleitfähige longitudinale Stange (2), die geeignet ist, um durch die Öffnung (0) hindurch im Eingriff zu sein, und eine elektrisch isolierende Vorrichtung (4), die geeignet ist, um in der Öffnung (0) zwischen der Stange (2) und der Wand (P) angeordnet zu sein, wobei die Stange (2) geeignet ist, um über ein inneres Ende (10), das auf einer Innenseite der Wand (P) angeordnet ist, elektrisch mit einem Niederspannungsanschluss des Transformators verbunden zu sein, und geeignet ist, um über ein äußeres Ende (14), das sich bezüglich der elektrisch isolierenden Vorrichtung (4) longitudinal vorstehend erstreckt auf einer Außenseite der Wand (P), mit einem oder mehreren elektrischen Leitern elektrisch verbunden zu sein, eine Schutz-Hülle (6), die um das äußere Ende (14) der Stange (2) herum angeordnet ist und mit wenigstens einem Durchgangs-Loch (60) für den oder die elektrischen Leiter versehen ist, wobei die Hülle (6) geeignet ist, wenigstens eine erste Konfiguration, in welcher das oder jedes Durchgangsloch (60) in der Lage ist, die Leiter, die sich von der Stange (2) aus erstrecken, entlang einer ersten Richtung hindurch zu lassen, und eine zweite Konfiguration einzunehmen, in welcher das oder jedes Durchgangsloch (60) in der Lage ist, die Leiter, die sich von der Stange (2) aus erstrecken, entlang einer zweiten, von der ersten verschiedenen Richtung hindurch zu lassen, wobei die Durchtrittsstange-Einrichtung (4) ein Organ (66, 114) zur Fixierung der Hülle (6) aufweist, das auf das äußere Ende (14) der Stange (2) gesetzt ist und das longitudinal zu dem Äußeren der Wand (P) hin bis über die elektrisch isolierende Vorrichtung (4) hinausgehend angeordnet ist, **dadurch gekennzeichnet, dass** die Durchtrittsstange-Einrichtung (1) ferner aufweist Mittel (68, 117) zum Einklemmen der Hülle (6) zwischen dem Fixierungs-Organ (66, 114) und den besagten Einklemm-Mitteln (68, 117).

2. Einrichtung gemäß Anspruch 1, **dadurch gekennzeichnet, dass** die erste Richtung longitudinal ist, wobei die zweite Richtung bezüglich der ersten einen Winkel bildet, der zwischen 0° und 90° beträgt.

3. Einrichtung gemäß Anspruch 1 oder 2, **dadurch gekennzeichnet, dass** die Hülle (6) aufweist einen Abschnitt (56) zur Fixierung an der isolierenden Vorrichtung (4), einen Boden (58), der das oder die Durchgangs-Löcher (60) trägt, und einen Ring-Faltenbalg (62), der sich zwischen dem Fixierungs-Abschnitt (56) und dem Boden (58) um das äußere Ende (14) der Stange (12) herum erstreckt.

4. Einrichtung gemäß Anspruch 3, **dadurch gekennzeichnet, dass** der Faltenbalg (62) aus natürlichem oder synthetischem Kautschuk ist.

5. Einrichtung gemäß Anspruch 1 oder 2, **dadurch gekennzeichnet, dass** die Hülle (6) aufweist eine Gehäuse (126), das um das äußere Ende (14) der Stange (2) herum angeordnet ist und das durchstoßen ist von wenigstens einem ersten und einem zweiten Kanal, die entlang der ersten und der zweiten Richtung angeordnet sind ausgehend von dem äußeren Ende (14) der Stange (2), einen ebenen Deckel (138), der in der Lage ist, einen von dem ersten oder dem zweiten Kanal zu verschließen, und einen durchstoßenen Deckel (140), der das oder die Löcher (60) trägt und der in der Lage ist, den anderen von dem ersten oder dem zweiten Kanal zu verschließen.

6. Einrichtung gemäß Anspruch 5, **dadurch gekennzeichnet, dass** das Gehäuse (126) aufweist zwei Halbschalen (132, 134), die zusammengebaut sind.

7. Einrichtung gemäß irgendeinem der Ansprüche 1 bis 6, **dadurch gekennzeichnet, dass** sie aufweist eine Fixierungsplatte (66), die an die isolierende Vorrichtung (4) geschraubt ist, und ein Band (68) zur Fixierung (68) der Hülle (6) an der Platte (66).

8. Einrichtung gemäß irgendeinem der Ansprüche 1 bis 7, **dadurch gekennzeichnet, dass** die Stange (2) aufweist ein mit einem Gewinde versehenes äußeres Ende (14), das einen runden Querschnitt hat, und dass sie aufweist einen Fixierungsring (114), der auf das mit Gewinde versehene äußere Ende (14) gesetzt ist, eine Mutter (116) zur Sperrung des Rings (114) gegen die isolierende Vorrichtung (4), der auf das äußere Ende (14) geschraubt ist, und eine Schelle zur Fixierung der Hülle (6) an dem Ring (114).

9. Einrichtung gemäß irgendeinem der Ansprüche 1 bis 8, **dadurch gekennzeichnet, dass** die isolierende Vorrichtung (4) aufweist
- einen Körper (84), der dazu bestimmt ist, auf der Innenseite der Wand (P) angeordnet zu sein,
- einen Deckel (86), der dazu bestimmt ist, auf der Außenseite der Wand (P) angeordnet zu sein, und an dem die Hülle (6) befestigt ist,
- Mittel zur Verbindung des Körpers (84) und des Deckels (86) zum zwischen sich Einspannen der besagten Wand (P).

10. Einrichtung gemäß irgendeinem der Ansprüche 1 bis 8, **dadurch gekennzeichnet, dass** die isolierende Vorrichtung (4) aufweist
- einen Körper (26), der dazu bestimmt ist, in der Öffnung (0) angeordnet zu sein und der einen Kragen (36) aufweist, der sich um die Öffnung (0) herum auf der Außenseite der Wand (P) erstreckt,
- einen Deckel (28), an dem die Hülle (16) befestigt ist und der dazu bestimmt ist, auf der Außenseite der Wand (P) starr fixiert zu sein unter Klemmen des Kragens (36) des Körpers (26) gegen die Wand (P).

11. Einrichtung gemäß irgendeinem der Ansprüche 1 bis 10, **dadurch gekennzeichnet, dass** die Einklemm-Mittel (68, 117) von der Hülle (6) verschieden sind.

## Claims

1. A bushing assembly (1) intended to be mounted through an orifice (0) of a wall (P) of an electric transformer, said assembly (1) comprising a conductive longitudinal bar (2) capable of being engaged through said orifice (0) and an electrically isolating device (4) capable of being placed inside said orifice (0) between said bar (2) and said wall (P), said bar (2) being capable of being electrically connected to a low voltage output of said transformer through an inner end (10) disposed on an inner side of said wall (P) and being capable of being electrically connected to one or more electrical conductors through an outer end (14) longitudinally projecting relative to said electrically isolating device (4) from an outer side of said wall (P), a protective sheath (6) disposed about said outer end (14) of said bar (2) and provided with at least one through hole (60) for the one or more electrical conductors,
said sheath (6) being capable of adopting at least one first configuration, in which the one or each through hole (60) is able to allow through conductors that extend from said bar (2) in a first direction, and a second configuration, in which the one or each through hole (60) is able to allow through conductors that extend from said bar (2) in a second direction that is different to said first direction, said bushing assembly (4) comprising a component (66, 114) for attaching said sheath (6) that is passed over said outer end (14) of said bar (2) and is longitudinally disposed towards the outside of said wall (P) beyond said electrically isolating device (4), **characterised in that** said bushing assembly (1) further comprises means (68, 117) for clamping said sheath (6) between said attachment component (66, 114) and said clamping means (68, 117).

2. The assembly according to claim 1, **characterised in that** said first direction is longitudinal, said second direction forming an angle between 0° and 90° relative to said first direction.

3. The assembly according to claim 1 or 2, **characterised in that** said sheath (6) comprises a part (56) for attaching to said isolating device (4), a base (58) having said one or more through holes (60) and an annular bellows (62) extending between said attachment part (56) and said base (58) about said outer end (14) of said bar (12).

4. The assembly according to claim 3, **characterised in that** said bellows (62) is made of natural or synthetic rubber.

5. The assembly according to claim 1 or 2, **characterised in that** said sheath (6) comprises a casing (126) that is disposed about said outer end (14) of said bar (2) and is at least perforated with first and second openings disposed in said first and second directions from said outer end (14) of said bar (2), a full cover (138) able to close one of said first or second openings and a cut-out cover (140) having said one or more through holes (60) able to close the other one of said first or second openings.

6. The assembly according to claim 5, **characterised in that** said casing (126) comprises two half-shells (132, 134) assembled together.

7. The assembly according to any one of claims 1 to 6, **characterised in that** it comprises an attachment plate (66) screwed onto said isolating device (4) and a clamp (68) for attaching said sheath (6) to said plate (66).

8. The assembly according to any one of claims 1 to 7, **characterised in that** said bar (2) has a threaded outer end (14) with a round cross-section and **in that** it comprises an attachment ring (114) passed over said threaded outer end (14), a nut (116) for blocking said ring (114) against said isolating device (4) screwed onto said outer end (14) and a collar for attaching said sheath (6) to said ring (114).

9. The assembly according to any one of claims 1 to 8, **characterised in that** said isolating device (4) comprises:
- a body (84) intended to be disposed on the inner side of said wall (P);
- a cover (86) intended to be disposed on the outer side of said wall (P) and to which said sheath (6) is attached;
- means for connecting said body (84) and said cover (86) so as to clamp said wall (P) between them.

10. The assembly according to any one of claims 1 to 8, **characterised in that** said isolating device (4) comprises:
- a body (26) intended to be disposed inside said orifice (0) and comprising a flange (36) extending about said orifice (0) on the outer side of said wall (P);
- a cover (28), to which said sheath (16) is attached, intended to be rigidly attached to the outer side of said wall (P) by clamping said flange (36) of said body (26) against said wall (P).

11. The assembly according to any one of claims 1 to 10, **characterised in that** said clamping means (68, 117) are distinct from said sheath (6).
